Europäisches Patentamt

European Patent Office

Office européen des brevets

(11) Veröffentlichungsnummer: **0 564 837 B1**

(12) **EUROPÄISCHE PATENTSCHRIFT**

(45) Veröffentlichungstag der Patentschrift: **20.09.95**

(51) Int. Cl.⁶: **B60K 13/04**, F16F 1/38

(21) Anmeldenummer: **93104000.0**

(22) Anmeldetag: **12.03.93**

(54) **Elastische Aufhängung zur Befestigung von dynamisch beanspruchten Funktionsteilen.**

(30) Priorität: **04.04.92 DE 4211397**

(43) Veröffentlichungstag der Anmeldung:
**13.10.93 Patentblatt 93/41**

(45) Bekanntmachung des Hinweises auf die Patenterteilung:
**20.09.95 Patentblatt 95/38**

(84) Benannte Vertragsstaaten:
**AT BE CH DE DK ES FR GB GR IE IT LI LU NL PT SE**

(56) Entgegenhaltungen:
**EP-A- 0 184 661**
**EP-A- 0 320 088**
**DE-A- 3 104 709**
**US-A- 4 550 795**

(73) Patentinhaber: **Saar-Gummiwerk GmbH**

**D-66687 Wadern (DE)**

(72) Erfinder: **Ihle, Erich, Dr.**
**Im Höhenrech 15**
**W-6648 Wadern (DE)**
Erfinder: **Lindenmayer, Bernhard**
**Kapuzinerstrasse 4**
**W-6648 Wadern (DE)**

(74) Vertreter: **Schulte, Jörg, Dipl.-Ing. et al**
**Hauptstrasse 2**
**D-45219 Essen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine elastische Aufhängung zur Befestigung von dynamisch beanspruchten Funktionsteilen, bestehend aus einem auf einer Grundplatte befestigten Haltebügel aus Metall und einer innerhalb des von Grundplatte und Haltebügel gebildeten Querschnitts über Stege aus gummielastischem Werkstoff schwingend gelagerten Aufnahmehülse.

Solche elastischen Aufhängungen sind beispielsweise im Automobilbau zur Lagerung von Auspuffanlagen und Katalysatoren bekannt. Die Aufhängung selbst ist mit ihrer Grundplatte starr am Fahrzeugboden befestigt, während die Ankopplung des Auspuffs bzw. des Katalysators über in der Aufnahmehülse gelagerte, geeignete Verbindungselemente, wie Bolzen oder Schrauben, erfolgt. Die vom angeschlossenen Funktionsteil auf die Aufnahmehülse wirkenden dynamischen Belastungen werden von den die Aufnahmehülse tragenden gummi-elastischen Stegen aufgenommen. Der aus starrem Metallband geformte Haltebügel dient als sog. Verliersicherung, um bei Stegbrüchen ein Herunterfallen des angeschlossenen Funktionsteils zu verhindern.

Um die erforderlichen Verformungswege zuzulassen, müssen die Stege entsprechend lang ausgelegt sein. Auch erfordern die infolge der dynamischen Belastungen auftretenden hohen Zug- und Druckkräfte sehr dicke Stegquerschnitte. Dadurch ergeben sich für die Aufhängung insgesamt relativ große Abmessungen. Auch muß, bedingt durch die hohen dynamischen Belastungen in Verbindung mit hoher thermischer Beanspruchung ein hochwertiger, teurer Werkstoff verwendet werden, beispielsweise Silikon-Kautschuk.

Der Erfindung liegt die Aufgabe zugrunde, eine elastische Aufhängung der eingangs genannten Art so zu verbessern, daß ohne negative Beeinträchtigung von Funktionsfähigkeit und Lebensdauer kleinere Abmessungen und niedrigere Gewichte erreicht werden.

Diese Aufgabe wird erfindugsgemäß dadurch gelöst, daß der Haltebügel aus einem eine ebene Verformung des Haltebügels zulassenden elastischen Metallband besteht.

Der Haltebügel aus elastischem Metallband, beispielsweise Federstahlband, dient somit nicht mehr ausschließlich als sog. Verliersicherung, vielmehr nimmt er nun seinerseits einen wesentlichen Anteil der dynamischen Belastungen auf. Die Verformung in horizontaler, d. h. zur Grundplatte paralleler Achse, in der möglichst große Verschiebewege erwünscht sind, kann dabei durch geeignete Wahl von Elastizität und Querschnitt des Metallbandes sowie der Ausgangsgeometrie des Haltebüglels in Abstimmung mit der Elastizität und Geometrie der gummi-elastischen Stege den jeweiligen Anforderungen angepaßt werden.

Durch die erfindungsgemäße elastische Ausbidlung des Haltebügels werden die von den gummi-elstischen Stegen aufzunehmenden Verschiebewege wesenlich reduziert. Die Stege können somit merklich kürzer ausgelegt und somit die Abmessungen der Aufhängung insgesamt verkleinert werden.

Gemäß einem weiteren Merkmal der Erfindung werden Elastizität und Ausgangsgeometrie des Haltebügels so ausgelegt, daß bis zu 90 %, vorzugsweise 50 - 70 % des Verschiebeweges der Aufnahmehülse von dem elastischen Haltebügel aufgenomme werden. Die örtlichen Dehnungen der gummi-elastischen Stege können auf Dehnungswerte bis unter 50 % reduziert werden. Da die aufzunehmenden Zug- und Druckspannugen entsprechend verringert werden, kann nunmehr auch bei hohen Temperaturen anstelle eines teuren Werkstoffes wie z.B. Silikon-Kautschuk ein bedeutend günstigerer Stegwerkstoff, beispielsweise EPDM eingesetzt werden.

Elastizität und Ausgangsgeometrie des Haltebügels können darüber hinaus auf die Elastizität und Ausgangsgeometrie der gummi-elastischen Stege so abgestimmt werden, daß auch der in gleicher Ebene, aber in beliebigem Winkel zur Grundplatte benötigte Schwingungsweg durch eine ebene Verformung des Haltebügels teilweise aufgenommen wird.

Im folgenden wird die Erfindung anhand des in den Figuren 1 bis 2 dargestellten Ausführungsbeispiels weiter erläutert.

Es zeigen

Fig. 1:      eine erfindungsgemäße elastische Aufhängung - unbeansprucht

Fig. 2:      eine erfindungsgemäße elastische Aufhängung bei horizontaler Beanspruchung

Eine elastische Aufhängung 1 besteht aus einer Grundplatte 3 mit einem auf der Grundplatte 3 befestigten Haltebügel 2. Grundplatte 3 und Haltebügel 2 schließen einen im gezeigten Beispiel im wesentlichen rechteckigen bzw. trapezförmigen Querschnitt ein, in dessen Symmetrieebene eine Aufnahmehülse 5 über mit der Grundplatte 3 bzw. dem Haltebügel 2 verbundene Stege 4 aus gummielastischem Werkstoff schwingend gelagert ist. Die Aufnahmehülse 5 dient zum Anschluß eines dynamisch beanspruchten Funktionsteiles. Grundplatte 3, Haltebügel 2 und Aufnahmehülse 5 bestehen aus Metall. Sie können zum Schutz vor Korrosion mit dem selben Werkstoff beschichtet sein, aus dem die Stege 4 bestehen.

Der Haltebügel 2 ist erfindugsgemäß aus elastischem Metallband, beispielsweise Federstahlband hergestellt, so daß er bei dynamischer Belastung einen wesentlichen Anteil des Verschiebeweges der Aufnahmehülse 5 aufnimmt.

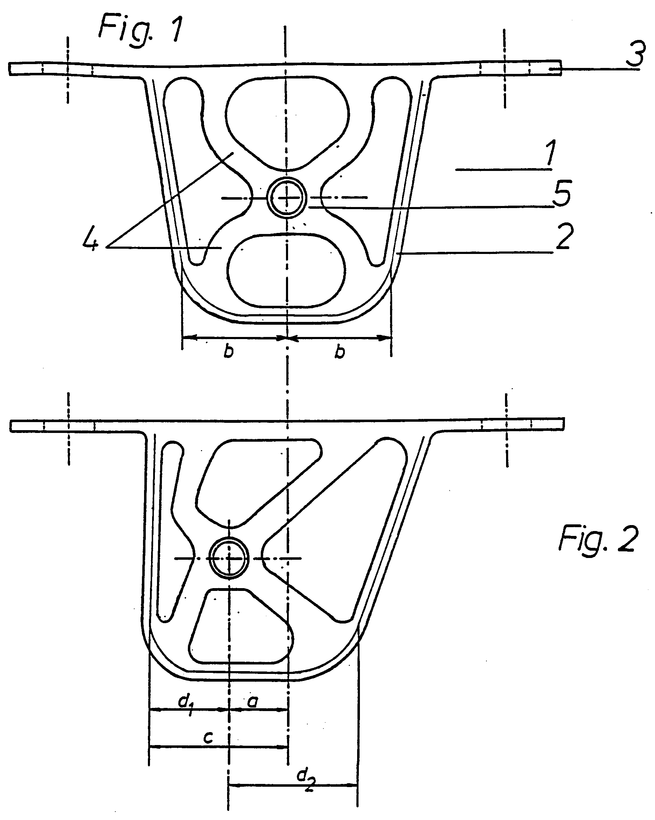

Die Figur 1 zeigt die unbelastete Aufhängung 1 mit symmetrischer Lage der Aufnahmehülse 5 mit gleichen seitlichen Abständen b zum Haltebügel 2. Figur 2 zeigt dagegen die Aufhängung mit horizontaler Verschiebung a der Aufnahmehülse 2, die bewirkt, daß sowohl der elastische Haltebügel 2 als auch die gummi-elastischen Stege 4 sich verschieben bzw. verformen.

Der linke seitliche Abstand d1 der Aufnahmehülse 5 zum Haltebügel 2 ist größer (d1 > b-a) und der rechte seitliche Abstand d2 kleiner (d2 < b + a) als bei einer Aufhängung mit starrem Haltebügel 2. Um diese Differenz werden die Stege 4 entlastet.

**Patentansprüche**

1. Elastische Aufhängung (1) zur Befestigung von dynamisch beanspruchten Funktionsteilen, bestehend aus einem auf einer Grundplatte (3) befestigten Haltebügel (2) aus Metall und einer innerhalb des von Grundplatte und Haltebügel gebildeten Querschnittes über Stege (4) aus gummi-elastischem Werkstoff schwingend gelagerten Aufnahmehülse (5), dadurch gekennzeichnet, daß der Haltebügel (2) aus einem eine ebene Verformung des Haltebügels (2) zulassenden elastischen Metallband besteht.

2. Elastische Aufhängung nach Anspruch 1, dadurch gekennzeichnet, daß Elastitzität und Ausgangsgeometrie des Haltebügels (2) auf die Elastizität und Ausgangsgeometrie der gummi-elastischen Stege (4) so abgestimmt sind, daß bis zu 90 %, vorzugsweise 50 - 70 %, des zur Grundplatte (3) parallelen Schwingungsweges der Aufnahmehülse (5) durch ebene Verformung des Haltebügels (2) aufgenommen werden.

3. Elastische Aufhängung nach Anspruch 1, dadurch gekennzeichnet, daß Elastizität und Ausgangsgeometrie des Haltebügels (2) auf die Elastizität und Ausgangsgeometrie der gummi-elastischen Stege (4) so abgestimmt sind, daß der in gleicher Ebene, aber in beliebigem Winkel zur Grundplatte benötigte Schwingungsweg durch eine ebene Verformung des Haltebügels teilweise aufgenommen wird.

**Claims**

1. Elastic suspension (1) for attaching dynamically loaded functional parts, comprising a retaining stirrup (2) made of metal attached to a base plate (3) and a holding ring (5) swing mounted inside the cross-section formed by the base plate and the retaining stirrup by means of webs (4) made of a rubber-elastic material, characterised in that the retaining stirrup (2) comprises an elastic metal band permitting an even deformation of the retaining stirrup (2).

2. Elastic suspension according to Claim 1, characterised in that the elasticity and initial geometry of the retaining stirrup (2) are coordinated with the elasticity and initial geometry of the rubber-elastic webs (4) so that up to 90%, preferably 50-70%, of the oscillation of the holding ring (5) parallel to the base plate (3) is absorbed by the even deformation of the retaining stirrup (2).

3. Elastic suspension according to Claim 1, characterised in that the elasticity and initial geometry of the retaining stirrup (2) are coordinated with the elasticity and initial geometry of the rubber-elastic webs (4) so that the oscillation needed in the same plane but at any angle to the base pate is partly absorbed by an even deformation of the retaining stirrup.

**Revendications**

1. Suspension élastique pour la fixation de pièces fonctionnelles soumises à des sollicitations dynamiques, constituée d'un étrier de maintien (2) en métal fixé sur une plaque de base (3) et d'une douille de réception montée oscillante au moyen de barrettes (4) en une matière élastique du genre caoutchouc à l'intérieur de la section transversale formée par la plaque de base et par l'étrier de maintien, caractérisée en ce que l'étrier de maintien (2) est constitué d'une bande métallique élastique permettant une déformation plane de l'étrier de maintien (2).

2. Suspension élastique selon la revendication 1, caractérisée en ce que l'élasticité et la géométrie de départ de l'étrier de maintien (2) sont harmonisées avec l'élasticité et la géométrie de départ des barrettes (4) élastiques du type caoutchouc, de telle sorte que jusqu'à 90%, et de préférence 50 à 70% de l'amplitude d'oscillations parallèles à la plaque de base 3 de la douille de réception (5) sont absorbées par une déformation plane de l'étrier de maintien (2).

3. Suspension élastique selon la revendication 1, caractérisée en ce que l'élasticité et la géométrie de départ de l'étrier de maintien (2) sont harmonisées avec l'élasticité et la géométrie de départ des barrettes (4) élastiques du type caoutchouc de telle sorte que l'amplitude des oscillations dans un même plan, mais suivant un angle quelconque par rapport à la plaque de base, soit absorbée partiellement par une déformation plane de l'étrier de maintien.

Fig. 1

Fig. 2